(19) **Europäisches Patentamt**

**European Patent Office**

**Office européen des brevets**

(11) **EP 0 876 271 B1**

(12) **EUROPÄISCHE PATENTSCHRIFT**

(45) Veröffentlichungstag und Bekanntmachung des Hinweises auf die Patenterteilung:
**04.12.2002 Patentblatt 2002/49**

(21) Anmeldenummer: **97902194.6**

(22) Anmeldetag: **21.01.1997**

(51) Int Cl.⁷: **B60T 8/00**

(86) Internationale Anmeldenummer:
**PCT/EP97/00260**

(87) Internationale Veröffentlichungsnummer:
**WO 97/027091 (31.07.1997 Gazette 1997/33)**

(54) **VERFAHREN ZUR BESTIMMUNG VON GRÖSSEN, DIE DAS FAHRVERHALTEN EINES FAHRZEUGS BESCHREIBEN**

METHOD OF DETERMINING QUANTITIES DESCRIBING VEHICLE TRAVEL BEHAVIOUR

PROCEDE DE DETERMINATION DE GRANDEURS DECRIVANT LE COMPORTEMENT DE ROULEMENT D'UN VEHICULE

(84) Benannte Vertragsstaaten:
**DE FR GB NL**

(30) Priorität: **27.01.1996 DE 19602994**

(43) Veröffentlichungstag der Anmeldung:
**11.11.1998 Patentblatt 1998/46**

(73) Patentinhaber: **Continental Teves AG & Co. oHG 60488 Frankfurt (DE)**

(72) Erfinder:
• **GUO, Limin**
**D-60489 Frankfurt am Main (DE)**
• **HERBST, Ralf**
**D-56355 Nastätten (DE)**

(74) Vertreter: **Dusil, Vladimir, Dipl.-Ing.**
**ITT Automotive Europe GmbH**
**Guerickestrasse 7**
**60488 Frankfurt am Main (DE)**

(56) Entgegenhaltungen:
**DE-A- 3 919 347          DE-A- 4 314 827**

**Beschreibung**

Die vorliegende Erfindung betrifft ein Verfahren zur Bestimmung von Größen, die das Fahrverhalten eines vierrädrigen Fahrzeugs beschreiben gemäß dem Oberbegriff des Anspruchs 1.

Neben passiven Sicherheitssystemen wie z.B. Sicherheitsgurten, Airbags, Knautschzone und Seitenaufprallschutz weisen Serienfahrzeuge mittlerer und höherer Preisklassen zunehmend auch Systeme zur Erhöhung der aktiven Sicherheit auf. Derartige Systeme stellen beispielsweise Antiblockiersysteme, Systeme zur Antriebsschlupfregelung und neuerdings auch Systeme zur Giermomentenregelung beim Durchfahren einer Kurve dar. Systeme zur Erhöhung der aktiven Sicherheit erfordern neben einem elektronischen Regler, der Vorgaben zum Eingriff beispielsweise in das Bremssystem liefert, auch zusätzliche Komponenten im Fahrzeug, welche die Erfassung des Fahrzustands einerseits und einen Regeleingriff andererseits ermöglichen. Insbesondere die zusätzlichen Fahrzeugkomponenten, beispielsweise komplizierte Sensoren zur Erfassung der Gierwinkelgeschwindigkeit oder der Fahrzeugquerbeschleunigung verteuern Systeme zur Erhöhung der aktiven Sicherheit erheblich. Die Verbilligung von derartigen Systemen ist daher ein wichtiges Entwicklungsziel. Hierzu gehört beispielsweise, daß Zustandsgrößen, die nur durch teure Sensoren gemessen werden können, durch Signale preiswerterer oder ohnehin vorhandener Sensoren nachgebildet werden sollen.

In der DE 42 16 301 A1 ist daher ein Verfahren der eingangs genannten Art vorgeschlagen worden, welches den Einbau eines Gierratensensors zur Bestimmung der Gierwinkelgeschwindigkeit eines Fahrzeugs, also der Winkelgeschwindigkeit um die Hochachse des Fahrzeugs, überflüssig machen soll. Anstelle eines Gierratensensors werden zwei axial versetzte Querbeschleunigungssensoren in das Fahrzeug eingesetzt, aus deren Signalen sich Werte für die vordere und die hintere Querbeschleunigung des Fahrzeugs ergeben. Ohne Berücksichtigung einer Wankbewegung ist damit auf einfache Weise die Bestimmung der Gierwinkelbeschleunigung sowie der Fahrzeugquerbeschleunigung möglich. Wird auch das Wanken des Fahrzeugs in einer Kurve berücksichtigt, kompliziert sich die ganze Rechnung, führt aber schließlich auch zum Ergebnis.

Aus DE-A-43 14 827 ist es bereits bekannt, aus den Radumfangsgeschwindigkeiten der Räder einer Achse auf die Giergeschwindigkeit des Fahrzeugs zu schließen, wobei diejenige Achse ausgewählt wird, deren Räder unter geringerem Schlupf laufen. Dieser Schlupf wird dort aus den gemittelten zwei Vorderradumfangsgeschwindigkeiten bzw. den gemittelten zwei Hinterradumfangsgeschwindigkeiten und der Fahrzeuggeschwindigkeit ermittelt.

Aufgabe der vorliegenden Erfindung ist es, ein Verfahren anzugeben, welches eine weitere Reduzierung der Sensorik am Fahrzeug erlaubt und somit die Möglichkeit schafft, Systeme zur Erhöhung der aktiven Sicherheit, insbesondere zur Giermomentenregelung, preiswerter zu machen.

Diese Aufgabe wird gelöst in Verbindung mit den kennzeichnenden Merkmalen des Anspruchs 1. Das Prinzip der vorliegenden Erfindung besteht also darin, sogar Querbeschleunigungssensoren entbehrlich zu machen, indem die unterschiedlichen Raddrehzahlen zweier auf je einer Fahrzeugseite angeordneter Räder ausgewertet werden. Die Auswahl dieser Räder soll allerdings an bestimmte Kriterien gebunden sein, wobei es wichtig ist, daß die ausgewählten Räder sich nicht in übermäßigem Schlupf befinden.

Es hat schon Bestrebungen gegeben, Querbeschleunigungssensoren zu ersetzen, indem die Raddrehzahlen entweder der beiden Vorderräder oder der beiden Hinterräder ausgewertet wurden. Dabei hat sich aber gezeigt, daß die angewandten Rechenverfahren nur dann die Realität widerspiegeln, wenn sich beide Räder in einem stabilen Fahrzustand, also ohne überhöhten Schlupf befinden. Bei einer starren Vorgabe eines Radpaares ist es allerdings relativ häufig der Fall, daß eines der Räder einer Schlupfregelung unterzogen werden muß. Für diesen Fall würde ein solches Verfahren zur Bestimmung von Fahrzuständen nur fehlerhaft arbeiten.

Bei der vorliegenden Erfindung besteht dagegen die Möglichkeit, aus vier verschiedenen Radpaaren zwei passende Räder zur Auswertung ihrer Raddrehzahlen heranzuziehen. Die Radpaare sind also entweder die beiden Räder der Vorderachse, die beiden Räder der Hinterachse oder jeweils diagonal gegenüberliegende Räder der Vorder- und Hinterachse. Auch während einer Schlupfregelung ist im Regelfall mindestens eines der vier genannten Radpaare von der Regelung nicht betroffen. Das bedeutet, daß die Nachbildung einer Gierwinkelgeschwindigkeit und/oder einer Querbeschleunigung auch bei instabilen Fahrzuständen mit Erfolg verbunden ist, wenn alle vier Raddrehzahlen zur Auswahl stehen, um aus diesen zwei auszuwählen.

Allerdings sollte aus Sicherheitsgründen noch geprüft werden, ob bei Auswahl eines bestimmten Radpaares die Signale der Radsensoren auch zuverlässig sind. Werden die Raddrehzahlen zur Nachbildung von Gierwinkelgeschwindigkeit und/oder Querbeschleunigung verwendet, so muß zunächst geprüft werden, ob beispielsweise gerade eine Extrapolation der- Radgeschwindigkeiten ausgeführt wird oder ob eine Schätzung zur Kalibrierung der Radgeschwindigkeiten noch nicht beendet ist. Für den Fall, daß die Radgeschwindigkeiten anhand der Raddrehzahlen zuverlässig bestimmbarsind, lassen sich die nachzubildenden Größen dann mittels dieser Radgeschwindigkeiten berechnen.

Außerdem ist selbstverständlich zu prüfen, ob die einzelnen Radsensoren intakt sind. Ist dies nicht der Fall, so ist ein anderes Radpaar auszuwählen.

Weist das Fahrzeug ohnehin ein Antiblockiersystem auf, welches die Signale der Radsensoren auswertet und welches die Funktionstüchtigkeit der Radsensoren überprüft, so läßt sich ein defekter Radsensor am besten durch die sogenannten Fehlerflags des Antiblockiersystems erkennen.

Sollte es zu einem Zeitpunkt doch einmal passieren, daß keine zwei auf unterschiedlichen Fahrzeugseiten angeordneten Räder sich im stabilen Fahrzustand befinden und intakte Radsensoren aufweisen, so kann die momentane Raddrehzahl bzw. Radgeschwindigkeit durch Extrapolation oder durch Konstantsetzen eines zuvor gemessenen Wertes ersetzt werden.

Anhängend ist eine Tabelle abgebildet, welche Berechnungsformeln für die Gierwinkelgeschwindigkeit $\dot{\Psi}$ und die Querbeschleunigung $a_q$ des Fahrzeugs angibt, je nachdem, welches Radpaar zur Berechnung dieser beiden Größen ausgewählt wurde. Es bezeichnen dabei:

| | |
|---|---|
| $\dot{\Psi}$ | Gierwinkelgeschwindigkeit |
| $a_q$ | Querbeschleunigung |
| $v_{vr}$ | Radgeschwindigkeit vorne rechts |
| $v_{vl}$ | Radgeschwindigkeit vorne links |
| $v_{hr}$ | Radgeschwindigkeit hinten rechts |
| $v_{hl}$ | Radgeschwindigkeit hinten links |
| S | Spurweite des Fahrzeugs |

Normalerweise ist in einem Berechnungszyklus mindestens eine der in der Tabelle aufgelisteten Situationen gültig, so daß ein Radpaar zur Berechnung der Größen gemäß dem erfindungsgemäßen Verfahren herangezogen werden kann. Es kann jedoch vorkommen, daß alle oder zumindest drei Räder entweder im Schlupf sind oder ihre Fehlerflags gesetzt sind. In dieser Situation können die Größen Querbeschleunigung und Gierwinkelgeschwindigkeit nicht mehr ohne weiteres nach der in der Tabelle angegebenen Formel berechnet werden.

Eine Lösung dafür ist, daß die Signale in einem solchen Zyklus den vorherigen Wert annehmen und konstant bleiben. Die Dauer dieser Situation ist normalerweise sehr kurz. Dauert eine solche Situation jedoch länger an, so bedeutet das, daß das Fahrzeug in ein hochdynamisches, mathematisch kaum beschreibbares Verhalten geraten ist, welches sich auch durch eine Giermomentenregelung mittels Bremseneingriffs aller Wahrscheinlichkeit nicht beheben läßt.

Es ist aber auch möglich, die momentane Radgeschwindigkeit bei Fehlen eines Radsensorsignals mit Hilfe der Fahrzeuglängsbeschleunigung zu extrapolieren:

$$v_{vr}(i+1) = v_{vr}(i) + a_{fzg}t_o$$

$$v_{vl}(i+1) = v_{vl}(i) + a_{fzg}t_o$$

$$v_{hr}(i+1) = v_{hr}(i) + a_{fzg}t_o$$

$$v_{hl}(i+1) = v_{hl}(i) + a_{fzg}t_o$$

Hierbei ist:

| | |
|---|---|
| $v_{xx}$ | Referenzgeschwindigkeit für Rad xx |
| $a_{fzg}$ | Fahrzeuglängsbeschleunigung |
| $t_o$ | Zeitintervall zwischen Extrapolationszyklen |
| i | Laufindex der Extrapolationszyklen |

Bei einer solchen Extrapolation der momentanen Raddrehzahlen kann allerdings die verzögerte Erkennung eines Radschlupfes zur Ungenauigkeit der Anfangswerte führen. Hierdurch ergibt sich dann ein konstanter additiver Fehler bei der Berechnung der momentanen Raddrehzahl, welcher sich auch nicht durch eine Tiefpaßfilterung minimieren läßt.

Anders dagegen verhält es sich bei verzögerter Erkennung eines Radschlupfes, wenn sich mindestens ein Radpaar finden läßt, welches sich in stabilen Fahrzuständen befindet. Dann tritt lediglich ein kurzzeitiger Fehler auf, der beim nächsten Rechenduchlauf behoben wird. Solche Fehler können dann auch durch den Einsatz eines Tiefpaßfilters minimiert werden.

Das erfindungsgemäße Verfahren wurde mit Hilfe von Daten aus Fahrversuchen untersucht und mit solchen Verfahren verglichen, die die Gierwinkelgeschwindigkeit bzw. die Querbeschleunigung durch gegenseitige Nachbildung der beiden Größen gewinnen oder diese Größen anhand des Lenkwinkels am Vorderrad nachbilden oder aber durch die Radgeschwindigkeiten festgelegter Radpaare, beispielsweise der Vorderachse oder der Hinterachse.

Im Vergleich zu diesen anderen Methoden liefert das erfindungsgemäße Verfahren besonders im Verlauf einer Giermomentenregelung wesentlich bessere Ergebnisse, da sich das erfindungsgemäße Verfahren auch bei dynamischen Fahrzuständen anwenden läßt, sofern sich nur mindestens zwei Räder unterhalb einer bestimmten Schlupfschwelle befinden. Bei stationären Fahrzuständen sind die Ergebnisse zumindest ungefiltert aufgrund des Signalrauschens der Radsensoren zunächst nicht so gut wie bei den zuvor genannten Verfahren, die die Gierwinkelgeschwindigkeit und/oder die Quer beschleunigung mittels anderer Signale nachbilden. Das Rauschen kann aber auf einfache Weise durch eine Tiefpaßfilterung beseitigt werden und wirkt sich infolge dann nicht mehr störend aus.

| Tabelle: Gültigkeitstabelle für die Nachbildung der Signale | | |
|---|---|---|
| **Wenn** | **dann** | |
| die vorderen zwei Räder nicht in zu großem Schlupf und ihre Fehlerflags nicht gesetzt sind, | $\dot{\Psi} = \dfrac{v_{vr} - v_{vl}}{S}$ | $a_q = \dfrac{v_{vr}^2 - v_{vl}^2}{2S}$ |
| die hinteren zwei Räder nicht in zu großem Schlupf und ihre Fehlerflags nicht gesetzt sind, | $\dot{\Psi} = \dfrac{v_{hr} - v_{vl}}{S}$ | $a_q = \dfrac{v_{hr}^2 - v_{hl}^2}{2S}$ |
| das Rad hinten rechts und das Rad vorne links nicht in zu großem Schlupf und ihre Fehlerflags nicht gesetzt sind, | $\dot{\Psi} = \dfrac{v_{hr} - v_{vl}}{S}$ | $a_q = \dfrac{v_{hr}^2 - v_{vl}^2}{2S}$ |
| das Rad vorne rechts und das Rad hinten links nicht in zu großem Schlupf und ihre Fehlerflags nicht gesetzt sind, | $\dot{\Psi} = \dfrac{v_{vr} - v_{hl}}{S}$ | $a_q = \dfrac{v_{vr}^2 - v_{hl}^2}{2S}$ |

**Patentansprüche**

1. Verfahren zur Bestimmung von das Fahrverhalten eines vierrädrigen Fahrzeugs beschreibenden Größen, wobei einer Recheneinrichtung zumindest Signale von Radsensoren zugeführt werden, welche die Geschwindigkeiten der einzelnen Räder wiedergeben, **dadurch gekennzeichnet, daß** zur Berechnung von Querbeschleunigung und/oder Gierwinkelgeschwindigkeit jeweils die Radgeschwindigkeiten von je einem auf der linken Fahrzeugseite und einem auf der rechten Fahrzeugseite angeordneten Rad herangezogen werden, wobei die Räder danach ausgewählt werden, daß sie keinen über einem Schwellenwert liegenden Schlupf aufweisen.

2. Verfahren nach Anspruch 1, **dadurch gekennzeichnet, daß** als zusätzliches Auswahlkriterium der Räder die Funktionstüchtigkeit der Radsensoren herangezogen wird.

3. Verfahren nach Anspruch 2, **dadurch gekennzeichnet, daß** die Funktionstüchtigkeit der Radsensoren über Fehlerflags überprüft wird, die von einem Regler eines Antiblockiersystems bei Defekt eines Radsensors gesetzt werden.

4. Verfahren nach einem der vorhergehenden Ansprüche, **dadurch gekennzeichnet, daß** für den Fall, daß zu einem Zeitpunkt keine zwei Räder die Auswahlkriterien erfüllen, eine Extrapolation der fehlenden Radgeschwindigkeit bzw. -geschwindigkeiten aus zuvor gemessenen Radgeschwindigkeiten vorgenommen wird.

5. Verfahren nach einem der Ansprüche 1 bis 3, **dadurch gekennzeichnet, daß** für den Fall, daß zu einem Zeitpunkt keine zwei Räder die Auswahlkriterien erfüllen, die zuletzt ermittelten Radgeschwindigkeiten als konstant angenommen werden.

**Claims**

1. Method of determining quantities describing the driving behavior of a four-wheel vehicle, wherein at least signals of wheel sensors representative of the speeds of the individual wheels are sent to a calculating device, **characterized in that** for calculating the transverse acceleration and/or yaw velocity, the wheel speeds of one wheel mounted on the left vehicle side and one wheel mounted on the right vehicle side are taken into account in each case, and those wheels are selected which have an amount of slip not exceeding a threshold value.

**2.** Method as claimed in claim 1,
**characterized in that** the operability of the wheel sensors is taken into account as an additional selection criterion with respect to the wheels.

**3.** Method as claimed in claim 2,
**characterized in that** the operability of the wheel sensors is checked by way of error flags which are set by a controller of an anti-lock system when malfunction of a wheel sensor occurs.

**4.** Method as claimed in any one of the preceding claims,
**characterized in that** in the case that no two wheels satisfy the selection criteria at a given moment, an extrapolation of the missing wheel speed or speeds is effected by way of previously measured wheel speeds.

**5.** Method as claimed in any one of claims 1 to 3,
**characterized in that** in the case that no two wheels satisfy the selection criteria at a given moment, the wheel speeds which were determined last are assumed as constant.

**Revendications**

**1.** Procédé pour déterminer des grandeurs décrivant le comportement de marche d'un véhicule à quatre routes, à un dispositif de calcul étant envoyés au moins des signaux des capteurs des roues qui traduisent les vitesses des différentes roues, **caractérisé en ce que** pour calculer l'accélération transversale et/ou la vitesse d'embardée on utilise les vitesses respectives d'une roue disposée sur le côté gauche du véhicule et d'une roue disposée sur le côté droit du véhicule, les roues étant choisies de manière qu'elles ne présentent pas un patinage dépassant une valeur de seuil.

**2.** Procédé selon la revendication 1, **caractérisé en ce que** comme critère supplémentaire de choix des roues, on utilise le bon fonctionnement des capteurs des roues.

**3.** Procédé selon la revendication 2, **caractérisé en ce que** le bon fonctionnement des capteurs des roues est contrôlé au moyen d'indicateurs de défaut qui sont placés par un régulateur d'un système antiblocage en cas de défaut d'un capteur de roue.

**4.** Procédé selon l'une des revendications précédentes, **caractérisé en ce que** dans le cas dans lequel à un instant aucune des deux roues ne satisfait aux critères de sélection, il est procédé à une extrapolation de la vitesse ou des vitesses absentes des roues à partir de vitesses des roues mesurées au préalable.

**5.** Procédé selon l'une des revendications 1 à 3, **caractérisé en ce que** dans le cas où à un instant aucune des deux roues ne satisfait aux critères de sélection, les vitesses des roues déterminées en dernier sont considérées comme constantes.